# EUROPÄISCHE PATENTSCHRIFT

(11) **EP 4 245 606 B1**
(45) Veröffentlichungstag und Bekanntmachung des Hinweises auf die Patenterteilung: **07.05.2025**
(21) Anmeldenummer: 22162541.1
(22) Anmeldetag: 16.03.2022
(51) Int. Cl.: B60Q 1/08, B60Q 1/14, F21S 41/153

(54) **VERFAHREN ZUR STEUERUNG EINES ADAPTIVEN KRAFTFAHRZEUGSCHEINWERFERS**
METHOD FOR CONTROLLING AN ADAPTIVE MOTOR VEHICLE HEADLAMP
PROCÉDÉ DE COMMANDE D'UN PHARE ADAPTATIF DE VÉHICULE AUTOMOBILE

(43) Veröffentlichungstag der Anmeldung: 20.09.2023
(73) Patentinhaber: ZKW Group GmbH, 3250 Wieselburg (AT)
(72) Erfinder: Brunner, Michael, 3650 Pöggstall (AT); Mayer, Peter, 3371 Neumarkt an der Ybbs (AT)
(74) Vertreter: Patentanwaltskanzlei Matschnig & Forsthuber OG

(56) Entgegenhaltungen:
- DE-A1- 102005 041 234
- DE-A1- 102008 062 640

## Beschreibung

Die Erfindung betrifft ein Verfahren zur Steuerung eines adaptiven Kraftfahrzeugscheinwerfers, wobei dem adaptiven Kraftfahrzeugscheinwerfer ein Datenspeicher zugeordnet ist, wobei der adaptive Kraftfahrzeugscheinwerfer zur Abstrahlung unterschiedlicher segmentierter Lichtverteilungen mit einer Auflösung von zumindest 2x12 eingerichtet ist und hierzu in Segmenten angeordnete Lichtquellen aufweist, wobei jedes Segment zumindest eine LED-Lichtquelle umfasst.

Weiters betrifft die Erfindung einen Kraftfahrzeugscheinwerfer, der zur Anwendung eines erfindungsgemäßen Verfahrens vorbereitet ist.

Aus dem Stand der Technik sind Scheinwerfer bekannt geworden, die die Abstrahlung einer adaptive Lichterverteilung ermöglichen. Solche Scheinwerfer werden in Fachkreisen manchmal auch als Pixelmodul bezeichnet. Die Lichtsegmente (Pixel; nachfolgend auch kurz "Segmente" genannt) sind individuell schalt- und dimmbar und jedem Lichtsegment ist ein Intensitätswert zugeordnet.

Es gibt verschiedenste Möglichkeiten eine solche adaptive, aus mehreren Lichtsegmenten (Pixeln) bestehende Lichtverteilung zu realisieren. Als bekannte und effiziente Methode ist die Verwendung einer Vielzahl an LEDs, die in einer Matrix angeordnet sind, im Einsatz, wobei jede einzelne LED individuell schalt- und dimmbar sein kann und somit einen Pixel bzw. ein Lichtsegment in einer abgestrahlten Lichtverteilung bildet.

Diese Art von Lichtsystemen erlaubt somit die Bildung von weitgehend beliebigen Lichtbildern, wobei z.B. eine Grundlichtverteilung jederzeit adaptiert werden kann, um beispielsweise gezielt andere Verkehrsteilnehmer (wie z.B. Passanten oder Fahrzeuge) auszublenden oder zu beleuchten. Ein Wechsel zwischen verschiedenen Lichtfunktionen kann dabei durch den Abruf entsprechender Datensätze von einem Speicher und dem anschließenden Übergeben der Daten an eine für die Lichtabstrahlung zuständige Lichteinheit realisiert werden. Unterschiedliche Fahrzeughersteller haben dabei häufig verschiedene Anforderungen an die Anzahl, die Art und den Wechsel zwischen unterschiedlichen Lichtfunktionen. Häufig soll bei einem Wechsel einer Lichtfunktion bzw. einer Lichtverteilung ein fließender Übergang erzielt werden. Teilweise gilt es hierbei auch gesetzliche Anforderungen zu erfüllen, insbesondere, wenn Adaption des Lichtbildes im Zuge von Kurvenfahrten vorgenommen werden sollen. Bei Kurvenfahrten kann zur besseren Ausleuchtung der Fahrbahn der Schwerpunkt des Lichtbildes abhängig vom Lenkeinschlagwinkel stark oder weniger stark verschoben werden. Sprunghafte Änderungen des Lichtbildes sollten daher nur Ausnahmesituationen vorbehalten sein, da diese unangenehm wahrgenommen werden und die Aufmerksamkeit eines Fahrzeuglenkers ungewünscht einschränken bzw. lenken können. Eine aus dem Stand der Technik bekannte Lösung zur Vermeidung einer sprunghaften Änderung im Lichtbild durch Umschalten zwischen mehreren Lichtverteilung ergibt sich durch Berechnen der individuellen Intensitätswerte aller einzelnen Pixel unter Berücksichtigung von Grenzwerten, welches jedoch zu hohen Anforderungen an die Rechenleistung der Recheneinheit führt, insbesondere bei steigender Anzahl an Pixel. Dokument DE 102008062640 A1 offenbart einen Fahrzeugscheinwerfer, ein Beleuchtungssystem für ein Fahrzeug, das mindestens einen solchen Fahrzeugscheinwerfer umfasst, ein Ansteuerverfahren für einen solchen Fahrzeugscheinwerfer, sowie ein korrespondierendes Computerprogramm und Computerprogrammprodukt. Dokument DE 102005041234 A1 offenbart einen Scheinwerfer für Fahrzeuge mit einer Mehrzahl von LED-Lichtquellen, die in einer gemeinsamen Licht abstrahlenden Fläche zusammengefasst sind.

Eine Aufgabe der Erfindung besteht daher darin, ein Verfahren zur Steuerung eines adaptiven Kraftfahrzeugscheinwerfers zu schaffen, durch das die eingangs genannten Nachteile überwunden werden können. Diese Aufgabe wird mit einem Verfahren eingangs genannter Art gelöst, bei welchem erfindungsgemäß die folgenden Schritte vorgesehen sind:
a) Bereitstellen eines besagten adaptiven Kraftfahrzeugscheinwerfers sowie eines besagten ersten Datenspeichers sowie Hinterlegen einer Anzahl von Datensätzen auf dem ersten Datenspeicher, wobei jeder Datensatz für jedes Segment einen Lichtintensitätswert zur Umsetzung einer von dem adaptiven Kraftfahrzeugscheinwerfer abzustrahlende Lichtverteilung vorgibt, wobei die Anzahl von Datensätzen zumindest zwei Gruppen an Datensätzen umfasst, nämlich eine erste Gruppe an Abblendlichtdatensätzen und eine zweite Gruppe an Fernlichtdatensätzen, wobei jede Gruppe zumindest einen Datensatz umfasst, wobei jeder Abblendlichtdatensatz zur Erzeugung einer Abblendlichtverteilung und jeder Fernlichtdatensatz zur Erzeugung einer Fernlichtverteilung konfiguriert ist, wobei die Ausgestaltungen der jeweiligen Lichtverteilungen für unterschiedliche Datensätze unterschiedlich sind,
b) Verbinden des adaptiven Kraftfahrzeugscheinwerfers mit einem Kraftfahrzeug, wobei das Kraftfahrzeug zur Ausgabe von Steuerdaten zur Steuerung des adaptiven Kraftfahrzeugscheinwerfers eingerichtet ist,
c) Übertragen der Steuerdaten durch das Kraftfahrzeug zu dem adaptiven Kraftfahrzeugscheinwerfer, wobei der adaptive Kraftfahrzeugscheinwerfer eine interne Recheneinheit aufweist, die die Steuerdaten empfängt und in Abhängigkeit von den Steuerdaten im ersten Datenspeicher hinterlegten Datensätzen auswählt und abruft, nachfolgend auch aktive Datensätze genannt,
d) Ansteuerung der in den Segmenten angeordneten Lichtquellen durch die Recheneinheit entsprechend den aktiven Datensätzen nach Schritt c) unter Anwendung einer konfigurierbaren Glättungsfunktion, wobei der adaptive Kraftfahrzeugscheinwerfer einen internen Datenspeicher aufweist, auf dem ein Lichtverteilungsübergangsregelungsalgorithmus hinterlegt ist, wobei der Lichtverteilungsübergangsregelungsalgorithmus durch eine Schnittstelle, mittels der auf den internen Datenspeicher von extern zugegriffen werden kann, vorgebbar ist, und die konfigurierbare Glättungsfunktion durch den Lichtverteilungsübergangsregelungsalgorithmus festgelegt wird, wobei die Anwendung der konfigurierbaren Glättungsfunktion jedenfalls unter Einhaltung der folgenden Regeln erfolgt:
   d1) Feststellen der Anzahl der aktiven Datensätze, wobei mittels der Steuerdaten jedem aktiven Datensatz eine prozentuelle Einzelgewichtung zukommt,
   d2) Festlegung der auszugebenden Ziellichtintensitäten jedes Segments durch Überlagerung der aus den aktiven Datensätzen ableitbaren Lichtintensitätswerte unter Berücksichtigung der jeweiligen Gewichtung,
   d3) Ausgabe der Ziellichtintensitäten für jedes Segment unter Berücksichtigung einer vorgebbaren zulässigen maximalen zeitlichen Änderungsrate der Lichtintensität, die durch das jeweilige Segment abgestrahlt wird, wobei im Falle des Überschreitens einer durch die konfigurierbare Glättungsfunktion vorgebbaren zulässigen maximalen zeitlichen Änderungsrate die Ziellichtintensitäten vorübergehend dergestalt manipuliert werden, dass die zulässige maximale zeitliche Änderungsrate nicht überschritten wird.

Die minimale Anzahl an Segmenten beträgt 24, und umfasst eine Matrix bestehend aus 2 Zeilen und 12 Spalten. Derzeit sind mit dieser Technologie unter Verwendung von LEDs Auflösungen bis zu 200 Segmenten wirtschaftlich herstellbar, wobei grundsätzlich auch der Einsatz einer höheren Anzahl von Segmenten denkbar wäre. Allerdings steigt mit zunehmender Anzahl von Segmenten auch der Rechenaufwand zur Berechnung der einzelnen Ziellichtintensitäten, weshalb als maximale Anzahl von Segmenten, die zukünftig wirtschaftlich ohne Einsatz einer GPU betreibbar sind, beispielsweise der Wert 400 angegeben werden kann, wobei sich diese Segmente in einer Matrix mit Zeilen und Spalten aufteilen. Alternativ dazu könnten bei einer besonders hohen Anzahl von Pixel Gruppen von Pixeln zu Clustern zusammengefasst werden, die gemeinschaftlich angesteuert werden, wodurch die Rechenleistung des Algorithmus reduziert könnte. Die Lichtintensität kann z.B. durch Taktung der Einschaltzeitdauern der Segmente bzw. der Ein- und Ausschaltdauerzeitverhältnisse eingestellt werden (entsprechend einem Duty-Cycle).

Der erste Datenspeicher kann extern von dem Scheinwerfer angeordnet sein. Alternativ dazu kann er intern im Scheinwerfer angeordnet sein.

Steuerdaten sind Daten, die von dem Fahrzeug an den Scheinwerfer übertragen werden. Es kann sich dabei einerseits um Daten handeln, die durch den Benutzer aktiv vorgegeben werden (z.B., wenn der Benutzer eine Lichtfunktion selbst auswählt), die abhängig von dem Benutzerverhalten geniert werden (wie z.B. dem Einlenken in eine Kurve bzw. eines dadurch verursachten Lenkwinkels) oder auch Daten, die unabhängig von dem Benutzerverhalten sind und z.B. durch das Fahrzeug bzw. eine in dem Fahrzeug angeordnete Umfelderfassung generiert werden, die zur Erkennung der Fahrzeugumgebung eingerichtet ist.

Alternativ zu dem Einsatz bei LED-Lichtquellen könnte die Erfindung auch bei anderen Scheinwerfern eingesetzt werden, deren Segmentierung nicht über die Ansteuerung von LEDs erfolgt. In diesem Zusammenhang seien z.B. die Technologien Digital micro-mirror device (DMD), Laserscanner, Liquid Crystal Display (LCD) oder sonstige Spatial-Light-Modulator-Systeme (SLM-Systeme) genannt.

Die Intensitätswerte können auf einem Speicher abgelegt sein und beschreiben gemeinsam eine Grundlichtverteilung. Dabei können unterschiedliche Grundlichtverteilungen, wie Abblendlicht, Fernlicht, Schlechtwetterlicht, Stadtlicht, usw. als Grundlichtverteilungen in Form von Datensätzen am Speicher abgelegt werden. Ob jetzt tatsächlich jeder Pixel als dedizierter Wert im Datensatz auf dem Speicher vorliegt oder wie üblich, zwischen den Werten von einer Anzahl an räumlich beabstandeten Pixel interpoliert wird, ist für die Erfindung nicht wesentlich.

Insbesondere kann vorgesehen sein, dass die Summe der prozentuellen Einzelgewichtungen in jeder Gruppe den Wert 100% nicht überschreitet, und wobei jeder Gruppe wiederum ein Gruppengewichtungswert zugeordnet ist, und die Summe der Gruppengewichtungswerte den Wert 100% nicht überschreitet, wobei die Festlegung der Ziellichtintensitäten jedes Segments gemäß Schritt d2) erfolgt, indem die prozentuellen Einzelgewichtungen mit dem jeweiligen Gruppengewichtungswert der zugehörigen Gruppe multipliziert werden und daraus resultierende Gewichtungswerte errechnet werden, wobei die aus den aktiven Datensätzen ableitbaren Lichtintensitätswerte mit dem jeweiligen resultierenden Gewichtungswert multipliziert werden und die sich daraus für jedes Segment ergebenden Lichtintensitätswerte jedes aktiven Datensatzes aufsummiert werden und diese Summe als Ziellichtintensität für jedes Segment festgelegt wird.

Weiters kann vorgesehen sein, dass sämtliche Gewichtungswerte so gewählt werden, dass die Summe der resultierenden Gewichtungswerte den Wert 100% erreicht. Alternativ dazu ist auch denkbar, dass generell ein leistungsschwächerer Betrieb, also ein Betrieb mit einer resultierenden Gewichtung von in Summe unter 100%, aufrechterhalten werden kann.

Insbesondere kann vorgesehen sein, dass die erste Gruppe an Abblendlichtdatensätzen Datensätze zur Erzeugung folgender unterschiedlicher Abblendlichtverteilungen umfasst:
I) eine erste Abblendlichtverteilung, die als Standardabblendlichtverteilung herangezogen werden kann, wobei es sich dabei vorzugsweise um ein blendfreies Abblendlicht handelt,
II) eine zweite Abblendlichtverteilung, die gegenüber der ersten Abblendlichtverteilung eine erhöhte Reichweite in einer rechten Hälfte der Lichtverteilung aufweist, um eine erhöhte Reichweite an einem rechten Fahrbahnrand zur verbesserten Fußgängererkennung zu ermöglichen,
III) eine dritte Abblendlichtverteilung, die gegenüber der ersten Abblendlichtverteilung verbreitert ist und eine waagrechte Hell-Dunkel-Grenze aufweist,
IV) eine vierte Abblendlichtverteilung, welche gegenüber der ersten Abblendlichtverteilung eine erhöhte Reichweite aufweist, indem die Abblendlichtverteilung gegenüber der ersten Abblendlichtverteilung um einen Winkel von zumindest 1° vertikal nach oben verschoben wird.

Zu I sei erwähnt, dass eine Blendung als behoben gilt bzw. kann dann von einem blendfreien Abblendlicht gesprochen werden, wenn bei einem Abblendlicht die Beleuchtungsstärke in einer Entfernung von 25 m vor jedem einzelnen Scheinwerfer auf einer Ebene senkrecht zur Fahrbahn in Höhe der Scheinwerfermitte und darüber nicht mehr als 1 lx beträgt. Liegt der höchste Punkt der leuchtenden Fläche der Scheinwerfer mehr als 1200 mm über der Fahrbahn, so darf die Beleuchtungsstärke unter den gleichen Bedingungen oberhalb einer Höhe von 1000 mm 1 lx nicht übersteigen. Bei Scheinwerfern, deren Anbringungshöhe 1400 mm übersteigt, darf die Hell-Dunkel-Grenze 15 m vor dem Scheinwerfer nur halb so hoch liegen wie die Scheinwerfermitte. Bei Scheinwerfern für asymmetrisches Abblendlicht darf die 1-Lux-Grenze von dem der Scheinwerfermitte entsprechenden Punkt unter einem Winkel von 15 Grad nach rechts ansteigen, sofern nicht z.B. aus rechtlichen Gründen eine andere Bestimmung vorgesehen ist. Die Scheinwerfer können die Fahrbahn so beleuchten, dass die Beleuchtungsstärke in einer Entfernung von 25 m vor den Scheinwerfern senkrecht zum auffallenden Licht in 150 mm Höhe über der Fahrbahn mindestens die vorgesehenen Werte erreicht. Paarweise verwendete Scheinwerfer für Fern- und Abblendlicht können so eingerichtet sein, dass sie nur gleichzeitig und gleichmäßig abgeblendet werden können.

Zu II sei erwähnt, dass gegenüber der Lichtverteilung nach Punkt I eine größere Leuchtweite und gegebenenfalls eine höhere Lichtintensität vorgesehen ist. D.h. es kann eine Lichtverteilung vorgesehen sein, die Abblendlichtverteilung mit einer höheren Reichweite am rechten Fahrbahnrand aufweist (aus Fahrersicht), um Fußgänger früher zu erkennen. Hierzu kann z.B. eine höhere Lichtintensität in einzelnen Segmenten vorgesehen sein, oder es können auch Segmente aktiv geschaltet werden, die in der Lichtverteilung nach Punkt I inaktiv sind.

Zu III sei erwähnt, dass z.B. die Hell-Dunkel-Grenze dabei waagrecht ausgebildet sein kann, sodass das Blenden anderer Verkehrsteilnehmer noch besser verhindert wird und insbesondere der Bereich vor dem Fahrzeug breiter ausgeleuchtet wird.

Zu IV sei erwähnt, dass eine solche Lichtverteilung beispielsweise durch ein Anheben des durch den Kraftfahrzeugscheinwerfer erzeugten Lichtkegels vorgesehen sein kann, wobei dies z.B. bei erhöhter Fahrgeschwindigkeit (z.B. über 80km/h) erfolgen kann.

Weiters kann vorgesehen sein, dass die zweite Gruppe an Fernlichtdatensätzen Datensätze zur Erzeugung folgender unterschiedlicher Fernlichtverteilungen umfasst:
I) eine erste Fernlichtverteilung, die als Standardfernlichtverteilung herangezogen werden kann,
II) eine zweite Fernlichtverteilung, die gegenüber der ersten Fernlichtverteilung eine reduzierte Lichtintensität aufweist, jedoch so operiert, dass diese weiterhin zumindest die minimalen gesetzlichen Vorgaben erfüllt,
III) eine dritte Fernlichtverteilung, welche im Vergleich zur ersten Fernlichtverteilung die Lichtintensität bzw. die Reichweite, beispielsweise durch ein Anheben des durch den Kraftfahrzeugscheinwerfer erzeugten Lichtkegels, bei hohen Fahrzeuggeschwindigkeit erhöht (z.B. über 80km/h),

Zu I sei erwähnt, dass diese Lichtverteilung eine erhöhte Sichtweite bei dunklen Fahrverhältnissen ermöglicht. Die Sichtweite bezieht sich auf die maximale horizontale Entfernung, welche es erlaubt ein bodennahes Objekt durch entsprechende Ausleuchtung durch die Scheinwerfer des Fahrzeugs bei dunklen Fahrverhältnissen zu erkennen.

Zu II sei erwähnt, dass es sich dabei um ein Eco-Fernlicht handeln kann.

Alle Lichtverteilungen werden in der Praxis von der Fachperson natürlich so ausgelegt, dass diese den anwendbaren gesetzlichen Anforderungen entsprechen können.

Insbesondere kann vorgesehen sein, dass die Anzahl von Datensätzen eine dritte Gruppe an Datensätzen umfasst, die Speziallichtverteilungen betreffen, die weder einer Abblendlichtverteilung noch einer Fernlichtverteilung entsprechen. Es kann sich dabei z.B. um Speziallichtfunktionen handeln, welche weder eine Abblendlichtfunktion noch eine Fernlichtfunktion darstellen. Diese Spezialfunktionen können auch länderabhängig oder witterungsabhängig ausgestaltet sein.

Weiters kann vorgesehen sein, dass die maximale zeitliche Änderungsrate der Ziellichtintensitäten in Abhängigkeit der erfassten Steuerdaten innerhalb einer vorgegebenen Ober- und Untergrenze variiert wird, wobei die tatsächliche Änderungsrate jedenfalls so gewählt ist, dass eine Änderung der Ziellichtintensität von 0% hin zu 100% innerhalb einer Zeitdauer zwischen 0,1s bis 5s erfolgt.

In der Praxis hat sich z.B. ein Wert von 1 Sekunde für die Änderung von 0 auf 100% als günstig erwiesen. Die Änderung kann linear oder auch nichtlinear erfolgen. Durch die der konfigurierbaren Glättungsfunktion vorgebbaren zulässigen maximalen zeitlichen Änderungsraten werden die Ziellichtintensitäten vorübergehend dergestalt manipuliert, dass die zulässige maximale zeitliche Änderungsrate nicht überschritten wird. Unter dem Ausdruck der maximalen zeitlichen Änderungsrate wird eine Änderungsrate der abgestrahlten Intensität eins Segments verstanden. Strahlt ein Segment beispielsweise bei Vollbetrieb (also 100% Auslastung) einen Lichtstrom von 200 lm ab, so würde bei einer zulässigen maximalen Änderungsrate von 200 lm/ s ein Wechsel von 0 auf 100% Leistung eine Zeitdauer von 1 Sekunde benötigen, sofern die zulässige maximale Änderungsrate genau eingehalten wird. Die tatsächliche Änderungsrate kann natürlich niedriger sein - vor allem dann, wenn eine raschere Änderung durch den jeweiligen Wechsel einer Lichtfunktion oder der Änderung einer Gewichtung ohnehin nicht erforderlich ist. Diese maximale Änderungsrate kann auch deutlich höher sein und z.B. Wechsel von 0 auf 100% Lichtleistung innerhalb von 0,1 Sekunden zulassen. Die jeweilig anwendbare maximale Änderungsrate kann in Abhängigkeit von einer Fahrsituation festgelegt werden.

Insbesondere kann vorgesehen sein, dass im Falle des Erkennens einer kritischen Verkehrssituation die maximale zeitliche Änderungsrate gegenüber einem Normalbetrieb erhöht wird. Diese zulässige maximale Änderungsrate kann auch von Steuerdaten abhängig sein. So kann vorgesehen sein, dass die maximale zulässige Änderungsrate bei einer verkehrskritischen Situation erhöht wird und bei einer normalen Verkehrssituation verringert ist, um die Aufmerksamkeit des Fahrers nicht fehlzuleiten. Die Glättung kann für jedes Segment einzeln erfolgen - d.h. ein Segment z.B. geglättet, und ein anderes nicht, wenn dort keine maximale Änderungsrate überschritten wird.

Weiters kann vorgesehen sein, dass der Kraftfahrzeugscheinwerfer zur Prüfung der Steuerdaten auf Plausibilität eingerichtet ist und diese Prüfung laufend durchführt, wobei bei Feststellen von korrumpierten Steuerdaten ein Rückfall auf einen sicheren Betrieb erfolgt, in dem vorzugsweise die erste Abblendlichtverteilung abgestrahlt wird.

Insbesondere kann vorgesehen sein, dass die Steuerdaten Informationen zu anderen in der Umgebung des Fahrzeugs erfassten Verkehrsteilnehmern enthalten, und im Falle, dass die aktiven Datensätze Fernlichtdatensätze enthalten, diese Fernlichtverteilungen dergestalt manipuliert werden, dass Segmente, deren Aktivierung zu einer Blendung dieser Verkehrsteilnehmer führen würde, mit geringerer Intensität angesteuert werden, vorzugsweise vollständig ausgeblendet werden. Das bedeutet, dass der Fahrzeugscheinwerfer vorzugsweise derart ausgestaltet ist, dass ein Blenden anderer Verkehrsteilnehmer verhindert wird.

Weiters kann vorgesehen sein, dass zur Ausgabe von Effekten die Ziellichtintensitäten für jedes Segment nach Schritt d3) vorübergehend manipuliert werden können, indem die gemäß Schritt d3) berechneten Ziellichtintensitäten durch Effektlichtintensitäten ersetzt werden. Diese vorübergehende Manipulation beschränkt sich auf die Zeitdauer des Effekts/der Animation (z.B. "Welcome-Light") und beträgt typischerweise weniger als 5 Sekunden.

Insbesondere kann vorgesehen sein, dass die Ziellichtintensitäten gemäß Schritt d3) in Abhängigkeit von dem Lenkwinkel des Fahrzeugs manipuliert werden, indem die durch die gemäß Schritt d3) berechnete Ziellichtverteilung in Abhängigkeit von dem Lenkwinkel des Fahrzeugs in horizontaler Richtung verschoben wird. Dadurch lässt sich ein Kurvenlicht realisieren, indem z.B. bei Lenkung nach links die Lichtverteilung nach links verschoben wird. D.h. die Ziellichtintensitäten wandern in horizontaler Richtung zwischen benachbarten Segmenten. Dieser Vorgang kann auch als "Bending" bezeichnet werden.

Weiters betrifft die Erfindung einen adaptiven Kraftfahrzeugscheinwerfer, der zur Anwendung in einem erfindungsgemäßen Verfahren eingerichtet ist, wobei der adaptive Kraftfahrzeugscheinwerfer zur Abstrahlung unterschiedlicher segmentierter Lichtverteilungen mit einer Auflösung von zumindest 2x12 eingerichtet ist und hierzu in Segmenten angeordnete Lichtquellen aufweist, wobei jedes Segment zumindest eine LED-Lichtquelle umfasst.

Zudem betrifft die Erfindung ein Kraftfahrzeug umfassend einen erfindungsgemäßen adaptiven Kraftfahrzeugscheinwerfer, sowie einen ersten Datenspeicher, der dem adaptiven Kraftfahrzeugscheinwerfer zugeordnet ist, wobei auf dem ersten Datenspeicher eine Anzahl von Datensätzen hinterlegt ist, wobei jeder Datensatz für jedes Segment einen Lichtintensitätswert zur Umsetzung einer von dem adaptiven Kraftfahrzeugscheinwerfer abzustrahlende Lichtverteilung vorgibt, wobei die Anzahl von Datensätzen zumindest zwei Gruppen an Datensätzen umfasst, nämlich eine erste Gruppe an Abblendlichtdatensätzen und eine zweite Gruppe an Fernlichtdatensätzen, wobei jede Gruppe zumindest einen Datensatz umfasst, wobei jeder Abblendlichtdatensatz zur Erzeugung einer Abblendlichtverteilung und jeder Fernlichtdatensatz zur Erzeugung einer Fernlichtverteilung konfiguriert ist, wobei die Ausgestaltungen der jeweiligen Lichtverteilungen für unterschiedliche Datensätze unterschiedlich sind, wobei das Kraftfahrzeug zur Umfelderfassung sowie zur Übertragung von Steuerdaten an den Kraftfahrzeugscheinwerfer eingerichtet ist.

Der Ausdruck Umfelderfassung beschreibt die Erfassung der Fahrzeugumgebung, die mittels Sensoren wie z.B. optischen Kameras, Ultraschallsensoren, Lidar, Radar usw. erfolgen kann.

Die Erfindung ist im Folgenden anhand einer beispielhaften und nicht einschränkenden Ausführungsform näher erläutert, die in den Figuren veranschaulicht ist. Darin zeigt
Figur 1 eine schematische Darstellung eines erfindungsgemäßen Kraftfahrzeugs mit einem erfindungsgemäßen adaptiven Kraftfahrzeugscheinwerfer,
Figur 2 zeigt einen erfindungsgemäßen adaptiven Kraftfahrzeugscheinwerfer,
Figur 3 eine beispielhafte Darstellung einzelner Aspekte der Erfindung,
Figur 4 ein beispielhaftes Ablaufdiagramm zu dem erfindungsgemäßen Verfahren,
Figur 5a bis 5c beispielhafte Lichtverteilungen, die mit dem erfindungsgemäßen Verfahren abgestrahlt werden können.

In den folgenden Figuren bezeichnen - sofern nicht anders angegeben - gleiche Bezugszeichen gleiche Merkmale.

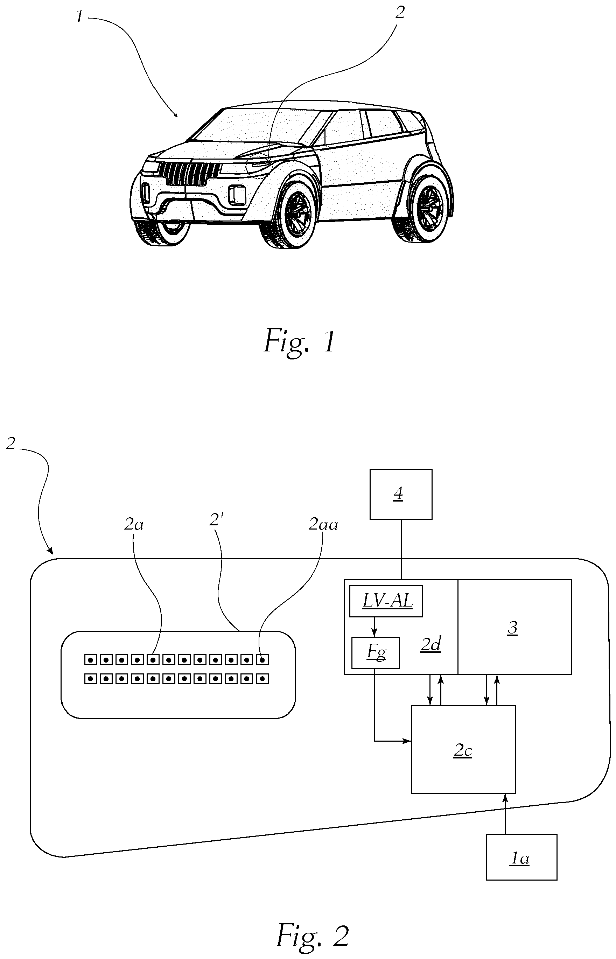

Figur 1 zeigt eine schematische Darstellung eines erfindungsgemäßen Kraftfahrzeugs 1 mit einem erfindungsgemäßen adaptiven Kraftfahrzeugscheinwerfer 2.

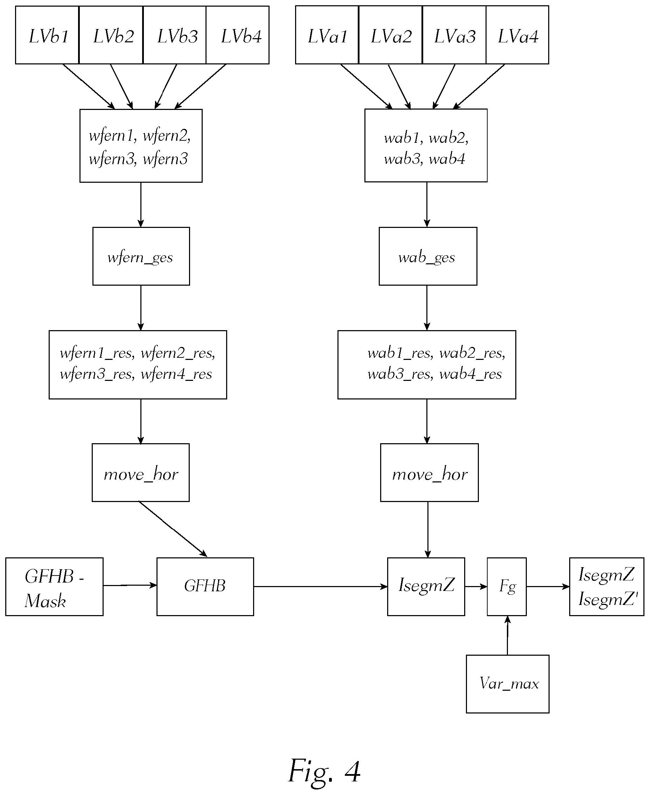

Figur 2 zeigt einen erfindungsgemäßen adaptiven Kraftfahrzeugscheinwerfer 2. Dieser Kraftfahrzeugscheinwerfer umfasst ein Lichtmodul 2' zur Abstrahlung von Lichtverteilungen. Das Lichtmodul 2' umfasst in diesem Beispiel eine Matrix von Lichtquellen 2aa in Form von 24 LEDs, die in zwei Reihen und zwölf Spalten angeordnet sind. Dem adaptiven Kraftfahrzeugscheinwerfer 2 ist ein erster Datenspeicher 3 zugeordnet. Der adaptive Kraftfahrzeugscheinwerfer 2 ist daher zur Abstrahlung unterschiedlicher segmentierter Lichtverteilungen mit einer Auflösung von zumindest 2x12 eingerichtet ist und hierzu in Segmenten 2a angeordnete Lichtquellen 2aa aufweist, wobei jedes Segment 2a zumindest eine LED-Lichtquelle, vorliegend genau eine LED-Lichtquelle, umfasst. Der adaptive Kraftfahrzeugscheinwerfer 2 weist eine interne Recheneinheit 2c auf, die zum Empfang von Steuerdaten 1a eingerichtet ist. Die Steuerdaten 1a können Informationen zu anderen in der Umgebung des Fahrzeugs 1 erfassten Verkehrsteilnehmern oder Informationen über das Kraftfahrzeug enthalten. Sie können ebenso durch den Benutzer bzw. Fahrzeuglenker vorgegeben bzw. durch diesen beeinflusst werden. Insbesondere kann vorgesehen sein, dass die Steuerdaten 1a Informationen zu anderen in der Umgebung des Fahrzeugs 1 erfassten Verkehrsteilnehmern enthalten, und im Falle, dass die aktiven Datensätze Fernlichtdatensätze 3b1 bis 3b4 enthalten, diese Fernlichtverteilungen LVb1 bis LVb4 dergestalt manipuliert werden, dass Segmente 2a, deren Aktivierung zu einer Blendung dieser Verkehrsteilnehmer führen würde, mit geringerer Intensität angesteuert, vorzugsweise vollständig ausgeblendet werden. Das bedeutet, dass der Fahrzeugscheinwerfer 2 vorzugsweise derart ausgestaltet ist, dass ein Blenden anderer Verkehrsteilnehmer verhindert wird. Diese Funktion wird in Figur 4 mittels der Bezeichnung Glarefree-High-Beam-Mask (GFHB-mask) bezeichnet, wobei daraus eine gewichtete sogenannte glarefree Highbeam-Lichtverteilung resultiert, also eine Fernlichtverteilung, die unter Berücksichtigung von Steuerdaten 1a blendfrei gestaltet ist. Des Weiteren kann eine Funktion move-hor vorgesehen sein, welche die Ziellichtverteilung in Abhängigkeit vom Lenkwinkel des Fahrzeugs 1 in horizontale Richtung verschiebt. Der Vollständigkeit halber sei erwähnt, dass sowohl die Funktion move_hor als auch die Funktion GFHB-mask optional sind und das erfindungsgemäße Verfahren auch ohne Verwendung dieser Funktionen durchgeführt werden kann.

Mit Blick auf Figur 2 sei zusätzlich erwähnt, dass der adaptive Kraftfahrzeugscheinwerfer 2 weiters einen internen Datenspeicher 2d aufweist, auf dem ein Lichtverteilungsübergangsregelungsalgorithmus LV-AL hinterlegt ist, wobei der Lichtverteilungsübergangsregelungsalgorithmus LV-AL durch eine Schnittstelle 4, mittels der auf den internen Datenspeicher 2d von extern zugegriffen werden kann, vorgebbar ist, und die konfigurierbare Glättungsfunktion Fg durch den Lichtverteilungsübergangsregelungsalgorithmus LV-AL festgelegt wird.

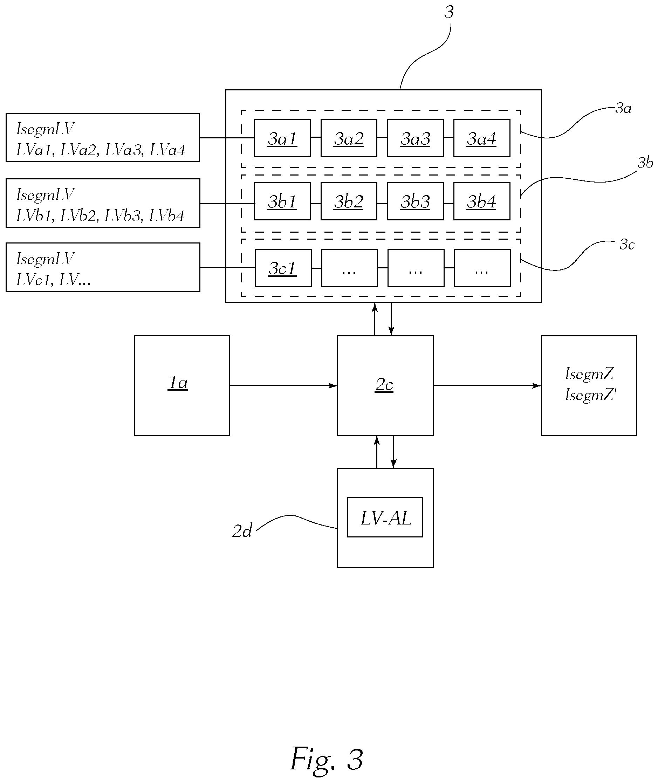

Figur 3 zeigt eine beispielhafte Darstellung einzelner Aspekte bzw. einzelner Komponenten der Erfindung. Die Erfindung betrifft ein Verfahren zur Steuerung des adaptiven Kraftfahrzeugscheinwerfers 2, wobei dem adaptiven Kraftfahrzeugscheinwerfer 2 der erster Datenspeicher 3 zugeordnet ist, wobei der adaptive Kraftfahrzeugscheinwerfer 2 zur Abstrahlung unterschiedlicher segmentierter Lichtverteilungen mit einer Auflösung von zumindest 2x12 eingerichtet ist und hierzu wie bereits erwähnt in Segmenten 2a angeordnete Lichtquellen 2aa aufweist, wobei jedes Segment 2aa zumindest eine LED-Lichtquelle umfasst, wobei das Verfahren die folgenden Schritte aufweist:
a) Bereitstellen eines besagten adaptiven Kraftfahrzeugscheinwerfers 2 sowie eines besagten ersten Datenspeichers 3 sowie Hinterlegen einer Anzahl von Datensätzen 3a1, 3a2, 3a3, 3a4, 3b1, 3b2, 3b3, 3b4 auf dem ersten Datenspeicher 3, wobei jeder Datensatz für jedes Segment 2a einen Lichtintensitätswert IsegmLV zur Umsetzung einer von dem adaptiven Kraftfahrzeugscheinwerfer 2 abzustrahlende Lichtverteilung LVa1, LVa2, LVa3, LVa4, LVb1, LVb2, LVb3 vorgibt, wobei die Anzahl von Datensätzen zumindest zwei Gruppen 3a, 3b an Datensätzen umfasst, nämlich eine erste Gruppe 3a an Abblendlichtdatensätzen 3a1, 3a2, 3a3, 3a4 und eine zweite Gruppe 3b an Fernlichtdatensätzen 3b1, 3b2, 3b3, 3b4, wobei jede Gruppe 3a, 3b zumindest einen Datensatz 3a1, 3a2, 3a3, 3a4, 3b1, 3b2, 3b3, 3b4 umfasst, wobei jeder Abblendlichtdatensatz 3a1, 3a2, 3a3, 3a4 zur Erzeugung einer Abblendlichtverteilung und jeder Fernlichtdatensatz 3b1, 3b2, 3b3 zur Erzeugung einer Fernlichtverteilung konfiguriert ist, wobei die Ausgestaltungen der jeweiligen Lichtverteilungen für unterschiedliche Datensätze 3a1, 3a2, 3a3, 3a4, 3b1, 3b2, 3b3, 3b4 unterschiedlich sind,
b) Verbinden des adaptiven Kraftfahrzeugscheinwerfers 2 mit einem Kraftfahrzeug 1, wobei das Kraftfahrzeug 1 zur Ausgabe von Steuerdaten 1a zur Steuerung des adaptiven Kraftfahrzeugscheinwerfers 2 eingerichtet ist,
c) Übertragen der Steuerdaten 1a durch das Kraftfahrzeug 1 zu dem adaptiven Kraftfahrzeugscheinwerfer 2, wobei der adaptive Kraftfahrzeugscheinwerfer 2 eine interne Recheneinheit 2c aufweist, die die Steuerdaten 1a empfängt und in Abhängigkeit von den Steuerdaten 1a im ersten Datenspeicher 3 hinterlegten Datensätzen 3a1, 3a2, 3a3, 3a4, 3b1, 3b2, 3b3 auswählt und abruft, nachfolgend auch aktive Datensätze genannt,
d) Ansteuerung der in den Segmenten 2a angeordneten Lichtquellen 2aa durch die Recheneinheit 2c entsprechend den aktiven Datensätzen 3a1, 3a2, 3a3, 3a4, 3b1, 3b2, 3b3 gemäß Schritt c) unter Anwendung einer konfigurierbaren Glättungsfunktion Fg, wobei der adaptive Kraftfahrzeugscheinwerfer 2 einen internen Datenspeicher 2d aufweist, auf dem ein Lichtverteilungsübergangsregelungsalgorithmus LV-AL hinterlegt ist, wobei der Lichtverteilungsübergangsregelungsalgorithmus LV-AL durch eine Schnittstelle 4, mittels der auf den internen Datenspeicher 2d von extern zugegriffen werden kann, vorgebbar ist, und die konfigurierbare Glättungsfunktion Fg durch den Lichtverteilungsübergangsregelungsalgorithmus LV-AL festgelegt wird, wobei die Anwendung der konfigurierbaren Glättungsfunktion Fg jedenfalls unter Einhaltung der folgenden Regeln erfolgt (siehe Fig. 4):
   d1) Feststellen der Anzahl der aktiven Datensätze 3a1, 3a2, 3a3, 3a4, 3b1, 3b2, 3b3, wobei mittels der Steuerdaten 1a jedem aktiven Datensatz 3a1, 3a2, 3a3, 3a4, 3b1, 3b2, 3b3 eine prozentuelle Einzelgewichtung wab1, wab2, wab3, wab4, wfern1, wfern2, wfern3 zukommt,
   d2) Festlegung der auszugebenden Ziellichtintensitäten IsegmZ jedes Segments 2a durch Überlagerung der aus den aktiven Datensätzen 3a1, 3a2, 3a3, 3b1, 3b2, 3b3 ableitbaren Lichtintensitätswerte IsegmLV unter Berücksichtigung der jeweiligen Gewichtung,
   d3) Ausgabe der Ziellichtintensitäten IsegmZ für jedes Segment 2a unter Berücksichtigung einer vorgebbaren zulässigen maximalen zeitlichen Änderungsrate der Lichtintensität, die durch das jeweilige Segment 2a abgestrahlt wird, wobei im Falle des Überschreitens einer durch die konfigurierbare Glättungsfunktion Fg vorgebbaren zulässigen maximalen zeitlichen Änderungsrate Var die Ziellichtintensitäten IsegmZ vorübergehend dergestalt manipuliert werden, dass die zulässige maximale zeitliche Änderungsrate Var_max nicht überschritten wird. Falls erforderlich, wird aus der Ziellichtintensität IsegmZ daher eine manipulierte Ziellichtintensität IsegmZ', die vorübergehend niedriger als die eigentliche Ziellichtintensität IsegmZ' ist, und zwar in dem Ausmaß, sodass die zulässige maximale zeitliche Änderungsrate Var_max gerade nicht überschritten wird, und zwar für die Zeitdauer, bis die nichtmanipulierte Ziellichtintensität IsegmZ erreicht wird.

Grundsätzlich können auch die inaktiven Datensätze durch die Recheneinheit 2c erfasst werden, allerdings kann es zur Datenreduktion günstig sein, wenn nur die aktiven Datensätze erfasst werden, also jene Datensätze, deren Gewichtung ungleich 0 ist.

Vorzugsweise kann vorgesehen sein, dass die Summe der prozentuellen Einzelgewichtungen wab1, wab2, wab3, wfern1, wfern2, wfern3 in jeder Gruppe 3a, 3b den Wert 100% nicht überschreitet, und wobei jeder Gruppe 3a, 3b wiederum ein Gruppengewichtungswert wab_ges, wfern_ges zugeordnet ist, und die Summe der Gruppengewichtungswerte den Wert 100% nicht überschreitet, wobei die Festlegung der Ziellichtintensitäten jedes Segments 2a gemäß Schritt d2) erfolgt, indem die prozentuellen Einzelgewichtungen wab1, wab2, wab3, wab4, wfern1, wfern2 mit dem jeweiligen Gruppengewichtungswert wab_ges, wfern_ges der zugehörigen Gruppe multipliziert werden und daraus resultierende Gewichtungswerte wab1_res, wab2_res errechnet werden, wobei die aus den aktiven Datensätzen ableitbaren Lichtintensitätswerte IsegmLV mit dem jeweiligen resultierenden Gewichtungswert wab1_res, wab2_res multipliziert werden und die sich daraus für jedes Segment 2a ergebenden Lichtintensitätswerte jedes aktiven Datensatzes 3a1, 3a2, 3a3, 3a4, 3b1, 3b2, 3b3, 3b4 aufsummiert werden und diese Summe als Ziellichtintensität für jedes Segment 2a festgelegt wird.

Es sei ein kurzes Beispiel zu einer Ausführungsform der Erfindung gegeben: Angenommen wird, die Gruppe Abblendlichtverteilung hat eine Gewichtung in Höhe von 60%, also wab_ges=0,6, und die Gruppe Fernlichtverteilung hat eine Gewichtung in Höhe von 40%, also wfern_ges=0,4. Umfasst dann z.B. die Abblendlichtverteilung zwei aktive Lichtverteilungen, die gleichgewichtet sein sollen (also wab1=0,5 und wab2=0,5), so würde sich die resultierende Intensität der jeweiligen Abblendlichtverteilungen wab1_res und wab2_res durch Multiplikation mit der Gewichtung wab_ges ergeben, d.h. zu je 0,5x0,6=0,3=wab1_res=wab2_res Gesamtgewichtung. Bei der Gewichtung der Fernlichtverteilungen wird analog dazu vorgegangen, sodass die resultierende Gesamtgewichtung den Wert 1 nicht überschreitet. Auf diese Weise können die einzelnen Lichtverteilungen elegant und mit geringem Rechenaufwand überlagert werden. Das Ausmaß der Überlagerung und der Übergang von einer Lichtfunktion zur nächsten kann durch Festlegung der Glättungsfunktion Fg einfach an die Bedürfnisse des einzelnen Fahrzeugherstellers angepasst werden, ohne dass dabei grundlegende Änderungen an den Lichtfunktionen des Fahrzeugscheinwerfers vorgenommen werden müssen.

Insbesondere kann vorgesehen sein, dass sämtliche Gewichtungswerte so gewählt werden, dass die Summe der resultierenden Gewichtungswerte wab1_res, wab2_res den Wert 100% erreicht. Alternativ dazu ist auch denkbar, dass generell schwächerer Betrieb, also unter 100%, aufrechterhalten werden kann.

Es kann vorgesehen sein, dass die erste Gruppe 3a an Abblendlichtdatensätzen 3a1, 3a2, 3a3, 3a4 Datensätze zur Erzeugung folgender unterschiedlicher Abblendlichtverteilungen LVa1, LVa2, LVa3, LVa4 umfasst:
I eine erste Abblendlichtverteilung LVa1, die als Standardabblendlichtverteilung herangezogen werden kann, wobei es sich dabei vorzugsweise um ein blendfreies Abblendlicht handelt,
II eine zweite Abblendlichtverteilung LVa2, die gegenüber der ersten Abblendlichtverteilung eine erhöhte Reichweite in einer rechten Hälfte der Lichtverteilung aufweist, um eine erhöhte Reichweite an einem rechten Fahrbahnrand zur verbesserten Fußgängererkennung zu ermöglichen,
III eine dritte Abblendlichtverteilung LVa3, die gegenüber der ersten Abblendlichtverteilung verbreitert ist und eine waagrechte Hell-Dunkel-Grenze aufweist,
IV eine vierte Abblendlichtverteilung LVa4, welche gegenüber der ersten Abblendlichtverteilung eine erhöhte Reichweite aufweist, indem die Abblendlichtverteilung gegenüber der ersten Lichtverteilung um einen Winkel von zumindest 1° vertikal nach oben verschoben wird.

Weiters kann vorgesehen sein, dass die zweite Gruppe 3b an Fernlichtdatensätzen 3b1, 3b2, 3b3 Datensätze zur Erzeugung folgender unterschiedlicher Fernlichtverteilungen LVb1, LVb2, LVb3, LVb4 umfasst:
I eine erste Fernlichtverteilung LVb1, die als Standardfernlichtverteilung herangezogen werden kann,
II eine zweite Fernlichtverteilung LVb2, die gegenüber der ersten Fernlichtverteilung LVb2 eine reduzierte Lichtintensität aufweist, jedoch so operiert, dass diese weiterhin zumindest die minimalen gesetzlichen Vorgaben erfüllt,
III eine dritte Fernlichtverteilung LVb3, welche im Vergleich zur ersten Fernlichtverteilung die Lichtintensität bzw. die Reichweite, beispielsweise durch ein Anheben des durch den Kraftfahrzeugscheinwerfer erzeugten Lichtkegels, bei hohen Fahrzeuggeschwindigkeit erhöht,

Alle Lichtverteilungen werden in der Praxis von der Fachperson natürlich so ausgelegt, dass diese den anwendbaren gesetzlichen Anforderungen entsprechen können.

Mit Blick auf Figur 3 sei erwähnt, dass die Anzahl von Datensätzen eine dritte Gruppe 3c an Datensätzen umfasst, die Speziallichtverteilungen betreffen, die weder einer Abblendlichtverteilung noch einer Fernlichtverteilung entsprechen.

Weiters kann vorgesehen sein, dass die maximale zeitliche Änderungsrate Var_max der Ziellichtintensitäten IsegmZ in Abhängigkeit der erfassten Steuerdaten 1a innerhalb einer vorgegebenen Ober- und Untergrenze variiert wird, wobei die tatsächliche Änderungsrate Var jedenfalls so gewählt ist, dass eine Änderung der Ziellichtintensität von 0% hin zu 100% innerhalb einer Zeitdauer zwischen 0,1s bis 5s erfolgt. Insbesondere kann dabei vorgesehen sein, dass im Falle des Erkennens einer kritischen Verkehrssituation die maximale zeitliche Änderungsrate Var_max gegenüber einem Normalbetrieb erhöht wird. Die zulässige maximale Änderungsrate Var_max kann z.B. auch durch Heranziehung der Steuerdaten veränderbar sein. In einer verkehrskritischen Situation kann es günstig sein, wenn die zulässige maximale Änderungsrate sehr hoch gewählt wird. Dass kann z.B. bei Blendung von Gegenverkehr, Erkennen/Hinweis auf Wild am Straßenrand, Erkennung von Fußgängern etc. der Fall sein.

Weiters kann vorgesehen sein, dass der Kraftfahrzeugscheinwerfer 2 zur Prüfung der Steuerdaten 1a auf Plausibilität eingerichtet ist und diese Prüfung laufend durchführt, wobei bei Feststellen von korrumpierten Steuerdaten 1a ein Rückfall auf einen sicheren Betrieb erfolgt, in dem vorzugsweise die erste Abblendlichtverteilung LVa1 abgestrahlt wird.

Insbesondere kann vorgesehen sein, dass die Steuerdaten 1a Informationen zu anderen in der Umgebung des Fahrzeugs 1 erfassten Verkehrsteilnehmern enthalten, und im Falle, dass die aktiven Datensätze 3a1, 3a2, 3a3, 3a4, 3b1, 3b2, 3b3, 3b4 Fernlichtdatensätze 3a1, 3a2, 3a3, 3a4 enthalten, diese Fernlichtverteilungen dergestalt manipuliert werden, dass Segmente 2a, deren Aktivierung zu einer Blendung dieser Verkehrsteilnehmer führen würde, mit geringerer Intensität angesteuert werden, vorzugsweise vollständig ausgeblendet werden.

Zudem kann vorgesehen sein, dass zur Ausgabe von Effekten die Ziellichtintensitäten IsegmZ für jedes Segment 2a nach Schritt d3 vorübergehend manipuliert werden können, indem die gemäß Schritt d3 berechneten Ziellichtintensitäten IsegmZ durch Effektlichtintensitäten ersetzt werden. Diese vorübergehende Manipulation beschränkt sich auf die Zeitdauer des Effekts/der Animation und beträgt typischerweise weniger als 5 Sekunden , z.B. Welcome-Light

Zudem kann vorgesehen sein, dass die Ziellichtintensitäten gemäß Schritt d3 in Abhängigkeit von dem Lenkwinkel des Fahrzeugs 1 manipuliert werden, indem die durch die durch die gemäß Schritt d3) berechnete Ziellichtverteilung in Abhängigkeit von dem Lenkwinkel des Fahrzeugs 1 in horizontaler Richtung verschoben wird, wobei diese Funktion in Fig. 4 als move_hor bezeichnet ist. Dadurch lässt sich ein Kurvenlicht realisieren, indem z.B. bei Lenkung nach links die Lichtverteilung nach links verschoben wird. D.h. die Ziellichtintensitäten wandern in horizontaler Richtung zwischen benachbarten Segmenten. Dieser Vorgang kann auch als "Bending" bezeichnet werden.

In einem weiteren Aspekt betrifft die Erfindung einen adaptiver Kraftfahrzeugscheinwerfer 2, der zur Anwendung in einem Verfahrens nach einem der Verfahrensansprüche eingerichtet ist, wobei der adaptive Kraftfahrzeugscheinwerfer 2 zur Abstrahlung unterschiedlicher segmentierter Lichtverteilungen mit einer Auflösung von zumindest 2x12 eingerichtet ist und hierzu in Segmenten 2a angeordnete Lichtquellen 2aa aufweist, wobei jedes Segment 2aa zumindest eine LED-Lichtquelle umfasst.

Weiters betrifft die Erfindung einen Kraftfahrzeug 1, umfassend einen adaptiven erfindungsgemäßen adaptiven Kraftfahrzeugscheinwerfer 2 sowie einen ersten Datenspeicher 3, der dem adaptiven Kraftfahrzeugscheinwerfer 2 zugeordnet ist, wobei auf dem ersten Datenspeicher 3 eine Anzahl von Datensätzen 3a1, 3a2, 3a3, 3a4, 3b1, 3b2, 3b3, 3b4 hinterlegt sind, wobei jeder Datensatz für jedes Segment 2a einen Lichtintensitätswert IsegmLV zur Umsetzung einer von dem adaptiven Kraftfahrzeugscheinwerfer 2 abzustrahlende Lichtverteilung LVa1, LVa2, LVa3, LVa4, LVb1, LVb2, LVb3 vorgibt, wobei die Anzahl von Datensätzen zumindest zwei Gruppen 3a, 3b an Datensätzen umfasst, nämlich eine erste Gruppe 3a an Abblendlichtdatensätzen 3a1, 3a2, 3a3, 3a4 und eine zweite Gruppe 3b an Fernlichtdatensätzen 3b1, 3b2, 3b3, 3b4, wobei jede Gruppe 3a, 3b zumindest einen Datensatz 3a1, 3a2, 3a3, 3a4, 3b1, 3b2, 3b3, 3b4 umfasst, wobei jeder Abblendlichtdatensatz 3a1, 3a2, 3a3, 3a4 zur Erzeugung einer Abblendlichtverteilung und jeder Fernlichtdatensatz 3b1, 3b2, 3b3 zur Erzeugung einer Fernlichtverteilung konfiguriert ist, wobei die Ausgestaltungen der jeweiligen Lichtverteilungen für unterschiedliche Datensätze 3a1, 3a2, 3a3, 3a4, 3b1, 3b2, 3b3, 3b4 unterschiedlich sind, wobei das Kraftfahrzeug 1 zur Umfelderfassung sowie zur Übertragung von Steuerdaten 1a an den Kraftfahrzeugscheinwerfer eingerichtet ist.

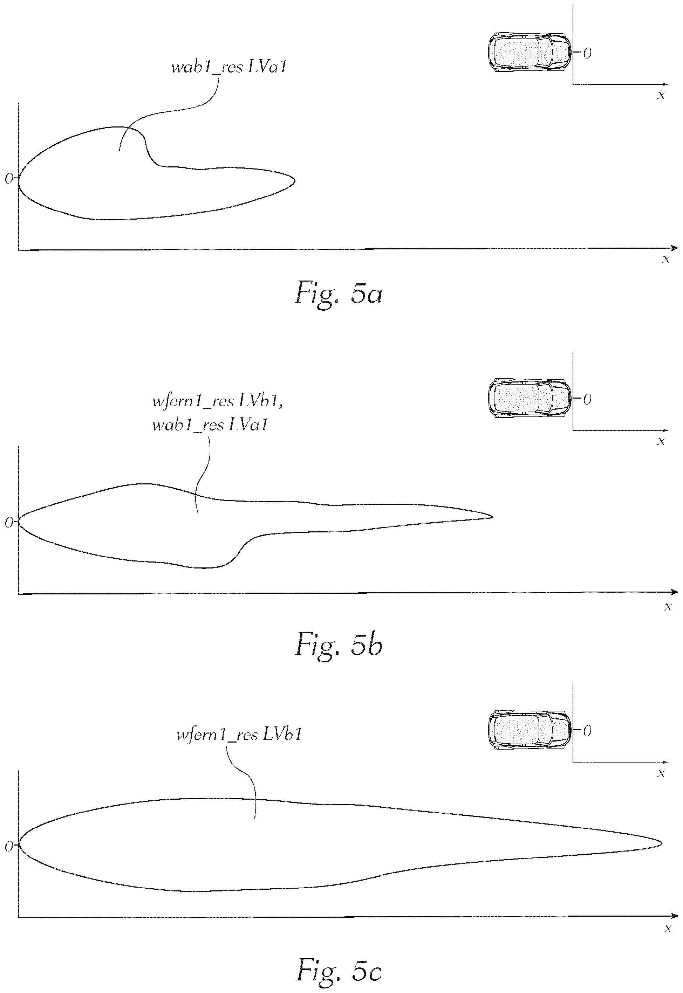

Figuren 5a bis 5c zeigen beispielhafte schematische Darstellungen von Lichtverteilungen, die mit dem erfindungsgemäßen Verfahren abgestrahlt werden können. Dabei ist jeweils eine Draufsicht auf eine Lichtverteilung gezeigt, die auf eine ebene horizontale Fläche, typischerweise eine Fahrbahn, projiziert wurde. Im Detail zeigt z.B. Fig. 5a die Lichtverteilung LVa1, ohne dass andere Lichtverteilungen überlagert werden. Die Gewichtung wab1_res könnte in diesem Beispiel daher 100% betragen. Fig. 5c zeigt eine Lichtverteilung LVb1 mit einer Gewichtung von z.B. wfern1_res in Höhe von 100%. Fig. 5b zeigt die Überlagerung der Lichtverteilungen LVa1 und LVb1, wobei die Gewichtungen wfern1_res und wab1_res z.B. jeweils 50% betragen können.

Die Erfindung ist nicht auf die gezeigten Ausführungsformen beschränkt, sondern durch den gesamten Schutzumfang der Ansprüche definiert. Auch können einzelne Aspekte der Erfindung bzw. der Ausführungsformen aufgegriffen und miteinander kombiniert werden.

Etwaige Bezugszeichen in den Ansprüchen sind beispielhaft und dienen nur der einfacheren Lesbarkeit der Ansprüche, ohne diese einzuschränken.

## Patentansprüche

1. Verfahren zur Steuerung eines adaptiven Kraftfahrzeugscheinwerfers (2), wobei dem adaptiven Kraftfahrzeugscheinwerfer (2) ein erster Datenspeicher (3) zugeordnet ist, wobei der adaptive Kraftfahrzeugscheinwerfer (2) zur Abstrahlung unterschiedlicher segmentierter Lichtverteilungen mit einer Auflösung von zumindest 2x12 eingerichtet ist und hierzu in Segmenten (2a) angeordnete Lichtquellen (2aa) aufweist, wobei jedes Segment (2aa) zumindest eine LED-Lichtquelle umfasst, wobei das Verfahren die folgenden Schritte aufweist:
a) Bereitstellen eines besagten adaptiven Kraftfahrzeugscheinwerfers (2) sowie eines besagten ersten Datenspeichers (3) sowie Hinterlegen einer Anzahl von Datensätzen (3a1, 3a2, 3a3, 3a4, 3b1, 3b2, 3b3, 3b4) auf dem ersten Datenspeicher (3), wobei jeder Datensatz für jedes Segment (2a) einen Lichtintensitätswert (IsegmLV) zur Umsetzung einer von dem adaptiven Kraftfahrzeugscheinwerfer (2) abzustrahlende Lichtverteilung (LVa1, LVa2, LVa3, LVa4, LVb1, LVb2, LVb3) vorgibt, wobei die Anzahl von Datensätzen zumindest zwei Gruppen (3a, 3b) an Datensätzen umfasst, nämlich eine erste Gruppe (3a) an Abblendlichtdatensätzen (3a1, 3a2, 3a3, 3a4) und eine zweite Gruppe (3b) an Fernlichtdatensätzen (3b1, 3b2, 3b3, 3b4), wobei jede Gruppe (3a, 3b) zumindest einen Datensatz (3a1, 3a2, 3a3, 3a4, 3b1, 3b2, 3b3, 3b4) umfasst, wobei jeder Abblendlichtdatensatz (3a1, 3a2, 3a3, 3a4) zur Erzeugung einer Abblendlichtverteilung und jeder Fernlichtdatensatz (3b1, 3b2, 3b3) zur Erzeugung einer Fernlichtverteilung konfiguriert ist, wobei die Ausgestaltungen der jeweiligen Lichtverteilungen für unterschiedliche Datensätze (3a1, 3a2, 3a3, 3a4, 3b1, 3b2, 3b3, 3b4) unterschiedlich sind,
b) Verbinden des adaptiven Kraftfahrzeugscheinwerfers (2) mit einem Kraftfahrzeug (1), wobei das Kraftfahrzeug (1) zur Ausgabe von Steuerdaten (1a) zur Steuerung des adaptiven Kraftfahrzeugscheinwerfers (2) eingerichtet ist,
c) Übertragen der Steuerdaten (1a) durch das Kraftfahrzeug (1) zu dem adaptiven Kraftfahrzeugscheinwerfer (2), wobei der adaptive Kraftfahrzeugscheinwerfer (2) eine interne Recheneinheit (2c) aufweist, die die Steuerdaten (1a) empfängt und in Abhängigkeit von den Steuerdaten (1a) im ersten Datenspeicher (3) hinterlegten Datensätzen (3a1, 3a2, 3a3, 3a4, 3b1, 3b2, 3b3) auswählt und abruft, nachfolgend auch aktive Datensätze genannt,
d) Ansteuerung der in den Segmenten (2a) angeordneten Lichtquellen (2aa) durch die Recheneinheit (2c) entsprechend den aktiven Datensätzen (3a1, 3a2, 3a3, 3a4, 3b1, 3b2, 3b3) nach Schritt c) unter Anwendung einer konfigurierbaren Glättungsfunktion (Fg), wobei der adaptive Kraftfahrzeugscheinwerfer (2) einen internen Datenspeicher (2d) aufweist, auf dem ein Lichtverteilungsübergangsregelungsalgorithmus (LV-AL) hinterlegt ist, wobei der Lichtverteilungsübergangsregelungsalgorithmus (LV-AL) durch eine Schnittstelle (4), mittels der auf den internen Datenspeicher (2d) von extern zugegriffen werden kann, vorgebbar ist, und die konfigurierbare Glättungsfunktion (Fg) durch den Lichtverteilungsübergangsregelungsalgorithmus (LV-AL) festgelegt wird, **dadurch gekennzeichnet, dass** die Anwendung der konfigurierbaren Glättungsfunktion (Fg) jedenfalls unter Einhaltung der folgenden Regeln erfolgt:
d1) Feststellen der Anzahl der aktiven Datensätze (3a1, 3a2, 3a3, 3a4, 3b1, 3b2, 3b3), wobei mittels der Steuerdaten (1a) jedem aktiven Datensatz (3a1, 3a2, 3a3, 3a4, 3b1, 3b2, 3b3) eine prozentuelle Einzelgewichtung (wab1, wab2, wab3, wfern1, wfern2, wfern3) zukommt,
d2) Festlegung der auszugebenden Ziellichtintensitäten (IsegmZ) jedes Segments (2a) durch Überlagerung der aus den aktiven Datensätzen (3a1, 3a2, 3a3, 3b1, 3b2, 3b3) ableitbaren Lichtintensitätswerte (IsegmLV) unter Berücksichtigung der jeweiligen Gewichtung,
d3) Ausgabe der Ziellichtintensitäten (IsegmZ) für jedes Segment (2a) unter Berücksichtigung einer vorgebbaren zulässigen maximalen zeitlichen Änderungsrate der Lichtintensität, die durch das jeweilige Segment (2a) abgestrahlt wird, wobei im Falle des Überschreitens einer durch die konfigurierbare Glättungsfunktion (Fg) vorgebbaren zulässigen maximalen zeitlichen Änderungsrate (Var) die Ziellichtintensitäten (IsegmZ, IsegmZ') vorübergehend dergestalt manipuliert werden, dass die zulässige maximale zeitliche Änderungsrate (Var_max) nicht überschritten wird.

2. Verfahren nach Anspruch 1, wobei die Summe der prozentuellen Einzelgewichtungen (wab1, wab2, wab3, wfern1, wfern2, wfern3) in jeder Gruppe (3a, 3b) den Wert 100% nicht überschreitet, und wobei jeder Gruppe (3a, 3b) wiederum ein Gruppengewichtungswert (wab_ges, wfern_ges) zugeordnet ist, und die Summe der Gruppengewichtungswerte den Wert 100% nicht überschreitet, wobei die Festlegung der Ziellichtintensitäten jedes Segments (2a) gemäß Schritt d2) erfolgt, indem die prozentuellen Einzelgewichtungen (wab1, wab2, wab3, wab4, wfern1, wfern2) mit dem jeweiligen Gruppengewichtungswert (wab_ges, wfern_ges) der zugehörigen Gruppe multipliziert werden und daraus resultierende Gewichtungswerte (wab1_res, wab2_res) errechnet werden, wobei die aus den aktiven Datensätzen (3a1, 3a2, 3a3, 3a4, 3b1, 3b2, 3b3, 3b4) ableitbaren Lichtintensitätswerte (IsegmLV) mit dem jeweiligen resultierenden Gewichtungswert (wab1_res, wab2_res) multipliziert werden und die sich daraus für jedes Segment (2a) ergebenden Lichtintensitätswerte jedes aktiven Datensatzes (3a1, 3a2, 3a3, 3a4, 3b1, 3b2, 3b3, 3b4) aufsummiert werden und diese Summe als Ziellichtintensität für jedes Segment (2a) festgelegt wird.

3. Verfahren nach Anspruch 2, wobei sämtliche Gewichtungswerte so gewählt werden, dass die Summe der resultierenden Gewichtungswerte (wab1_res, wab2_res) den Wert 100% erreicht.

4. Verfahren nach einem der vorhergehenden Ansprüche, wobei die erste Gruppe (3a) an Abblendlichtdatensätzen (3a1, 3a2, 3a3, 3a4) Datensätze zur Erzeugung folgender unterschiedlicher Abblendlichtverteilungen (LVa1, LVa2, LVa3, LVa4) umfasst:
I) eine erste Abblendlichtverteilung (LVa1), die als Standardabblendlichtverteilung herangezogen werden kann, wobei es sich dabei vorzugsweise um ein blendfreies Abblendlicht handelt,
II) eine zweite Abblendlichtverteilung (LVa2), die gegenüber der ersten Abblendlichtverteilung eine erhöhte Reichweite in einer rechten Hälfte der Lichtverteilung aufweist, um eine erhöhte Reichweite an einem rechten Fahrbahnrand zur verbesserten Fußgängererkennung zu ermöglichen,
III) eine dritte Abblendlichtverteilung (LVa3), die gegenüber der ersten Abblendlichtverteilung verbreitert ist und eine waagrechte Hell-Dunkel-Grenze aufweist,
IV) eine vierte Abblendlichtverteilung (LVa4), welche gegenüber der ersten Abblendlichtverteilung eine erhöhte Reichweite aufweist, indem die Abblendlichtverteilung gegenüber der ersten Lichtverteilung um einen Winkel von zumindest 1° vertikal nach oben verschoben wird.

5. Verfahren nach einem der vorhergehenden Ansprüche, wobei die zweite Gruppe (3b) an Fernlichtdatensätzen (3b1, 3b2, 3b3) Datensätze zur Erzeugung folgender unterschiedlicher Fernlichtverteilungen (LVb1, LVb2, LVb3, LVb4) umfasst:
I) eine erste Fernlichtverteilung (LVb1), die als Standardfernlichtverteilung herangezogen werden kann,
II) eine zweite Fernlichtverteilung (LVb2), die gegenüber der ersten Fernlichtverteilung (LVb2) eine reduzierte Lichtintensität aufweist, jedoch so operiert, dass diese weiterhin zumindest die minimalen gesetzlichen Vorgaben erfüllt,
III) eine dritte Fernlichtverteilung (LVb3), welche im Vergleich zur ersten Fernlichtverteilung die Lichtintensität bzw. die Reichweite, beispielsweise durch ein Anheben des durch den Kraftfahrzeugscheinwerfer erzeugten Lichtkegels, bei hohen Fahrzeuggeschwindigkeit erhöht.

6. Verfahren nach einem der vorhergehenden Ansprüche, wobei die Anzahl von Datensätzen eine dritte Gruppe (3c) an Datensätzen umfasst, die Speziallichtverteilungen betreffen, die weder einer Abblendlichtverteilung noch einer Fernlichtverteilung entsprechen.

7. Verfahren nach einem der vorhergehenden Ansprüche, wobei die maximale zeitliche Änderungsrate (Var_max) der Ziellichtintensitäten (IsegmZ) in Abhängigkeit der erfassten Steuerdaten (1a) innerhalb einer vorgegebene Ober- und Untergrenze variiert wird, wobei die tatsächliche Änderungsrate (Var) jedenfalls so gewählt ist, dass eine Änderung der Ziellichtintensität von 0% hin zu 100% innerhalb einer Zeitdauer zwischen 0,1s bis 5s erfolgt.

8. Verfahren nach Anspruch 7, wobei im Falle des Erkennens einer kritischen Verkehrssituation die maximale zeitliche Änderungsrate (Var_max) gegenüber einem Normalbetrieb erhöht wird.

9. Verfahren nach einem der vorhergehenden Ansprüche, wobei der Kraftfahrzeugscheinwerfer (2) zur Prüfung der Steuerdaten (1a) auf Plausibilität eingerichtet ist und diese Prüfung laufend durchführt, wobei bei Feststellen von korrumpierten Steuerdaten (1a) ein Rückfall auf einen sicheren Betrieb erfolgt, in dem vorzugsweise die erste Abblendlichtverteilung (LVa1) abgestrahlt wird.

10. Verfahren nach einem der vorhergehenden Ansprüche, wobei die Steuerdaten (1a) Informationen zu anderen in der Umgebung des Fahrzeugs (1) erfassten Verkehrsteilnehmern enthalten, und im Falle, dass die aktiven Datensätze (3a1, 3a2, 3a3, 3a4, 3b1, 3b2, 3b3, 3b4) Fernlichtdatensätze (3a1, 3a2, 3a3, 3a4) enthalten, diese Fernlichtverteilungen dergestalt manipuliert werden, dass Segmente (2a), deren Aktivierung zu einer Blendung dieser Verkehrsteilnehmer führen würde, mit geringerer Intensität angesteuert werden, vorzugsweise vollständig ausgeblendet werden.

11. Verfahren nach einem der vorhergehenden Ansprüche, wobei zur Ausgabe von Effekten die Ziellichtintensitäten (IsegmZ) für jedes Segment (2a) nach Schritt d3) vorübergehend manipuliert werden können, indem die gemäß Schritt d3) berechneten Ziellichtintensitäten (IsegmZ) durch Effektlichtintensitäten ersetzt werden.

12. Verfahren nach einem der vorhergehenden Ansprüche, wobei die Ziellichtintensitäten gemäß Schritt d3) in Abhängigkeit von dem Lenkwinkel des Fahrzeugs (1) manipuliert werden, indem die durch die durch die gemäß Schritt d3) berechnete Ziellichtverteilung in Abhängigkeit von dem Lenkwinkel des Fahrzeugs (1) in horizontaler Richtung verschoben wird (move_hor).

13. Adaptiver Kraftfahrzeugscheinwerfer (2), der zur Anwendung in einem Verfahren nach einem der vorhergehenden Ansprüche eingerichtet ist, wobei der adaptive Kraftfahrzeugscheinwerfer (2) zur Abstrahlung unterschiedlicher segmentierter Lichtverteilungen mit einer Auflösung von zumindest 2x12 eingerichtet ist und hierzu in Segmenten (2a) angeordnete Lichtquellen (2aa) aufweist, wobei jedes Segment (2aa) zumindest eine LED-Lichtquelle umfasst.

14. Kraftfahrzeug (1) umfassend einen adaptiven Kraftfahrzeugscheinwerfer (2) nach Anspruch 13 sowie einen ersten Datenspeicher (3), der dem adaptiven Kraftfahrzeugscheinwerfer (2) zugeordnet ist, wobei auf dem ersten Datenspeicher (3) eine Anzahl von Datensätzen (3a1, 3a2, 3a3, 3a4, 3b1, 3b2, 3b3, 3b4) hinterlegt ist, wobei jeder Datensatz für jedes Segment (2a) einen Lichtintensitätswert (IsegmLV) zur Umsetzung einer von dem adaptiven Kraftfahrzeugscheinwerfer (2) abzustrahlende Lichtverteilung (LVa1, LVa2, LVa3, LVa4, LVb1, LVb2, LVb3) vorgibt, wobei die Anzahl von Datensätzen zumindest zwei Gruppen (3a, 3b) an Datensätzen umfasst, nämlich eine erste Gruppe (3a) an Abblendlichtdatensätzen (3a1, 3a2, 3a3, 3a4) und eine zweite Gruppe (3b) an Fernlichtdatensätzen (3b1, 3b2, 3b3, 3b4), wobei jede Gruppe (3a, 3b) zumindest einen Datensatz (3a1, 3a2, 3a3, 3a4, 3b1, 3b2, 3b3, 3b4) umfasst, wobei jeder Abblendlichtdatensatz (3a1, 3a2, 3a3, 3a4) zur Erzeugung einer Abblendlichtverteilung und jeder Fernlichtdatensatz (3b1, 3b2, 3b3) zur Erzeugung einer Fernlichtverteilung konfiguriert ist, wobei die Ausgestaltungen der jeweiligen Lichtverteilungen für unterschiedliche Datensätze (3a1, 3a2, 3a3, 3a4, 3b1, 3b2, 3b3, 3b4) unterschiedlich sind, wobei das Kraftfahrzeug (1) zur Umfelderfassung sowie zur Übertragung von Steuerdaten (1a) an den Kraftfahrzeugscheinwerfer eingerichtet ist.

## Claims

1. Method for controlling an adaptive motor vehicle headlamp (2), a first data memory (3) being assigned to the adaptive motor vehicle headlamp (2), the adaptive motor vehicle headlamp (2) being set up to emit different segmented light distributions with a resolution of at least 2x12 and having light sources (2aa) arranged in segments (2a) for this purpose, each segment (2aa) comprising at least one LED light source, the method having the following steps:
a) Providing a said adaptive vehicle headlamp (2) and a said first data memory (3) and storing a number of data sets (3a1, 3a2, 3a3, 3a4, 3b1, 3b2, 3b3, 3b4) on the first data memory (3), each data set specifying for each segment (2a) a light intensity value (IsegmLV) for implementing a light distribution (LVa1, LVa2, LVa3, LVa4, LVb1, LVb2, LVb3) to be emitted by the adaptive motor vehicle headlamp (2), wherein the number of data sets comprises at least two groups (3a, 3b) of data sets, namely a first group (3a) of low beam data sets (3a1, 3a2, 3a3, 3a4) and a second group (3b) of high beam data sets (3b1, 3b2, 3b3, 3b4), wherein each group (3a, 3b) comprises at least one data set (3a1, 3a2, 3a3, 3a4, 3b1, 3b2, 3b3, 3b4), wherein each low beam data set (3a1, 3a2, 3a3, 3a4) is configured to generate a low beam distribution and each high beam data set (3b1, 3b2, 3b3) is configured to generate a high beam distribution, wherein the configurations of the respective light distributions are different for different data sets (3a1, 3a2, 3a3, 3a4, 3b1, 3b2, 3b3, 3b4),
b) Connecting the adaptive motor vehicle headlamp (2) to a motor vehicle (1), the motor vehicle (1) being set up to output control data (1a) for controlling the adaptive motor vehicle headlamp (2),
c) Transmission of the control data (1a) by the motor vehicle (1) to the adaptive motor vehicle headlamp (2), the adaptive motor vehicle headlamp (2) having an internal computing unit (2c) which receives the control data (1a) and selects and retrieves data sets (3a1, 3a2, 3a3, 3a4, 3b1, 3b2, 3b3) stored in the first data memory (3) as a function of the control data (1a), hereinafter also referred to as active data records,
d) Actuation of the light sources (2aa) arranged in the segments (2a) by the computing unit (2c) in accordance with the active data sets (3a1, 3a2, 3a3, 3a4, 3b1, 3b2, 3b3) according to step c) using a configurable smoothing function (Fg), the adaptive motor vehicle headlamp (2) having an internal data memory (2d) on which a light distribution transition control algorithm (LV-AL) is stored, the light distribution transition control algorithm (LV-AL) being presettable by means of an interface (4), by means of which the internal data memory (2d) can be accessed externally, and the configurable smoothing function (Fg) being determined by the light distribution transition control algorithm (LV-AL), **characterized in that** the configurable smoothing function (Fg) is applied in any case in compliance with the following rules:
d1) Determining the number of active data sets (3a1, 3a2, 3a3, 3a4, 3b1, 3b2, 3b3), whereby each active data set (3a1, 3a2, 3a3, 3a4, 3b1, 3b2, 3b3) is assigned an individual percentage weighting (wab1, wab2, wab3, wfern1, wfern2, wfern3) by means of the control data (1a),
d2) Determining the target light intensities (IsegmZ) to be output for each segment (2a) by superimposing the light intensity values (IsegmLV) that can be derived from the active data sets (3a1, 3a2, 3a3, 3b1, 3b2, 3b3), taking into account the respective weighting,
d3) Outputting the target light intensities (IsegmZ) for each segment (2a), taking into account a predeterminable permissible maximum rate of change over time of the light intensity which is emitted by the respective segment (2a), wherein, if a permissible maximum rate of change in time (Var), which can be predetermined by the configurable smoothing function (Fg), is exceeded, the target light intensities (IsegmZ, IsegmZ') are temporarily manipulated in such a way that the permissible maximum temporal rate of change (Var_max) is not exceeded.

2. Method according to claim 1, wherein the sum of the individual percentage weightings (wab1, wab2, wab3, wfern1, wfern2, wfern3) in each group (3a, 3b) does not exceed the value 100%, and wherein each group (3a, 3b) is in turn assigned a group weighting value (wab_ges, wfern_ges), and the sum of the group weighting values does not exceed the value 100%, the target light intensities of each segment (2a) being determined in accordance with step d2) by multiplying the individual percentage weightings (wab1, wab2, wab3, wab4, wfern1, wfern2) by the respective group weighting value (wab_ges, wfern_ges) of the associated group and the resulting weighting values (wab1_res, wab2_res) are calculated, whereby the light intensity values (IsegmLV) that can be derived from the active data sets (3a1, 3a2, 3a3, 3a4, 3b1, 3b2, 3b3, 3b4) are multiplied by the respective resulting weighting value (wab1_res, wab2_res) and the resulting light intensity values of each active data set (3a1, 3a2, 3a3, 3a4, 3b1, 3b2, 3b3, 3b4) for each segment (2a) are added up and this sum is defined as the target light intensity for each segment (2a).

3. Method according to claim 2, wherein all weighting values are selected such that the sum of the resulting weighting values (wab1_res, wab2_res) reaches the value 100%.

4. Method according to any of the preceding claims, wherein the first group (3a) of low beam data sets (3a1, 3a2, 3a3, 3a4) comprises data sets for generating the following different low beam distributions (LVa1, LVa2, LVa3, LVa4):
I) a first low beam distribution (LVa1), which can be used as a standard low beam distribution, preferably a glare-free low beam,
II) a second low beam distribution (LVa2), which has an increased range in a right-hand half of the light distribution compared to the first low beam distribution, in order to enable an increased range at a right-hand edge of the road for improved pedestrian detection,
III) a third low beam distribution (LVa3), which is wider than the first low beam distribution and has a horizontal cut-off line,
IV) a fourth low beam distribution (LVa4), which has an increased range compared to the first low beam distribution, in that the low beam distribution is shifted vertically upwards by an angle of at least 1° compared to the first light distribution.

5. Method according to any of the preceding claims, wherein the second group (3b) of main beam data sets (3b1, 3b2, 3b3) comprises data sets for generating the following different main beam distributions (LVb1, LVb2, LVb3, LVb4):
I) a first main beam distribution (LVb1), which can be used as a standard main beam distribution,
II) a second main beam distribution (LVb2), which has a reduced light intensity compared to the first main beam distribution (LVb2), but operates in such a way that it still meets at least the minimum legal requirements,
III) a third main beam distribution (LVb3) which, compared to the first main beam distribution, increases the light intensity or the range, for example by raising the light cone generated by the motor vehicle headlamp, at high vehicle speeds.

6. Method according to any of the preceding claims, wherein the number of data records comprises a third group (3c) of data records relating to special light distributions which correspond neither to a low beam distribution nor to a high beam distribution.

7. Method according to any of the preceding claims, wherein the maximum temporal rate of change (Var_max) of the target light intensities (IsegmZ) is varied as a function of the detected control data (1a) within a predetermined upper and lower limit, wherein the actual rate of change (Var) is in any case selected such that a change in the target light intensity from 0% to 100% takes place within a period of time between 0.1s and 5s.

8. Method according to claim 7, wherein the maximum temporal rate of change (Var_max) is increased compared to normal operation if a critical traffic situation is detected.

9. Method according to any of the preceding claims, wherein the motor vehicle headlamp (2) is set up to check the control data (1a) for plausibility and performs this check continuously, wherein if corrupted control data (1a) is detected, a fallback to safe operation takes place, in which the first low beam distribution (LVa1) is preferably emitted.

10. Method according to any of the preceding claims, wherein the control data (1a) contain information on other road users detected in the vicinity of the vehicle (1), and in the event that the active data sets (3a1, 3a2, 3a3, 3a4, 3b1, 3b2, 3b3, 3b4) contain high beam data sets (3a1, 3a2, 3a3, 3a4), these high beam distributions are manipulated in such a way that segments (2a) whose activation would lead to dazzling of these road users are activated with lower intensity, preferably completely blanked out.

11. Method according to any of the preceding claims, wherein the target light intensities (IsegmZ) for each segment (2a) can be temporarily manipulated according to step d3) in order to output effects by replacing the target light intensities (IsegmZ) calculated according to step d3) with effect light intensities.

12. Method according to any of the preceding claims, wherein the target light intensities according to step d3) are manipulated as a function of the steering angle of the vehicle (1) by moving (move_hor) the target light distribution calculated according to step d3) in the horizontal direction as a function of the steering angle of the vehicle (1).

13. Adaptive motor vehicle headlamp (2), which is set up for use in a method according to any of the preceding claims, wherein the adaptive motor vehicle headlamp (2) is set up for emitting different segmented light distributions with a resolution of at least 2x12 and has light sources (2aa) arranged in segments (2a) for this purpose, wherein each segment (2aa) comprises at least one LED light source.

14. Motor vehicle (1) comprising an adaptive motor vehicle headlamp (2) according to claim 13 and a first data memory (3) which is assigned to the adaptive motor vehicle headlamp (2), a number of data sets (3a1, 3a2, 3a3, 3a4, 3b1, 3b2, 3b3, 3b4) being stored on the first data memory (3), each data set specifying for each segment (2a) a light intensity value (IsegmLV) for implementing a light distribution (LVa1, LVa2, LVa3, LVa4, LVb1, LVb2, LVb3) to be emitted by the adaptive motor vehicle headlamp (2), the number of data sets comprising at least two groups (3a, 3b) of data sets, namely a first group (3a) of low beam data sets (3a1, 3a2, 3a3, 3a4) and a second group (3b) of high beam data sets (3b1, 3b2, 3b3, 3b4), each group (3a, 3b) comprising at least one data set (3a1, 3a2, 3a3, 3a4, 3b1, 3b2, 3b3, 3b4), each low beam data set (3a1, 3a2, 3a3, 3a4) for generating a low beam distribution and each high beam data set (3b1, 3b2, 3b3) is configured to generate a high beam distribution, with the configurations of the respective light distributions being different for different data sets (3a1, 3a2, 3a3, 3a4, 3b1, 3b2, 3b3, 3b4), with the motor vehicle (1) being set up for environment detection and for transmitting control data (1a) to the motor vehicle headlamp.

## Revendications

1. Procédé de commande d'un projecteur automobile adaptatif (2), une première mémoire de données (3) étant associée au projecteur automobile adaptatif (2), le projecteur automobile adaptatif (2) étant conçu pour émettre différentes distributions lumineuses segmentées avec une résolution d'au moins 2x12 et présentant à cet effet des sources lumineuses (2aa) disposées en segments (2a), chaque segment (2aa) comprenant au moins une source lumineuse LED, le procédé présentant les étapes suivantes :
a) fournir un dit projecteur automobile adaptatif (2) et une dite première mémoire de données (3) et déposer un certain nombre des jeux de données (3a1, 3a2, 3a3, 3a4, 3b1, 3b2, 3b3, 3b4) sur la première mémoire de données (3), chaque jeu de données définissant pour chaque segment (2a) une valeur d'intensité lumineuse (IsegmLV) pour la conversion d'une distribution lumineuse (LVa1, LVa2, LVa3, LVa4, LVb1, LVb2, LVb3) à émettre par le projecteur automobile adaptatif (2), le nombre de jeux de données comprenant au moins deux groupes (3a, 3b) de jeux de données, à savoir un premier groupe (3a) des jeux de données de feux de croisement (3a1, 3a2, 3a3, 3a4) et un deuxième groupe (3b) des jeux de données de feux de route (3b1, 3b2, 3b3, 3b4), chaque groupe (3a, 3b) comprenant au moins un jeux de données (3a1, 3a2, 3a3, 3a4, 3b1, 3b2, 3b3, 3b4), dans lequel chaque jeux de données de feux de croisement (3a1, 3a2, 3a3, 3a4) est configuré pour générer une distribution de feux de croisement et chaque jeu de données de feux de route (3b1, 3b2, 3b3) est configuré pour générer une distribution de feux de route, les configurations des distributions de lumière respectives étant différentes pour différents jeux de données (3a1, 3a2, 3a3, 3a4, 3b1, 3b2, 3b3, 3b4),
b) relier le projecteur automobile adaptatif (2) à un véhicule automobile (1), le véhicule automobile (1) étant conçu pour émettre des données de commande (1a) pour commander le projecteur automobile adaptatif (2),
c) transmission des données de commande (1a) par le véhicule automobile (1) au projecteur automobile adaptatif (2), le projecteur automobile adaptatif (2) présentant une unité de calcul interne (2c) qui reçoit les données de commande (1a) et les sélectionne et les appelle en fonction des jeux de données (3a1, 3a2, 3a3, 3a4, 3b1, 3b2, 3b3) déposés dans la première mémoire de données (3), appelés ci-après également jeux de données actifs,
d) commande des sources lumineuses (2aa) disposées dans les segments (2a) par l'unité de calcul (2c) en fonction des jeux de données actifs (3a1, 3a2, 3a3, 3a4, 3b1, 3b2, 3b3) selon l'étape c) en utilisant une fonction de lissage configurable (Fg), le projecteur automobile adaptatif (2) présentant une mémoire de données interne (2d) sur laquelle est enregistré un algorithme de régulation de transition de distribution de lumière (LV-AL), l'algorithme de régulation de transition de distribution de lumière (LV-AL) pouvant être prédéfini par une interface (4) au moyen de laquelle on peut accéder de l'extérieur à la mémoire de données interne (2d), et la fonction de lissage configurable (Fg) étant déterminée par l'algorithme de régulation de transition de distribution de lumière (LV-AL), **caractérisé en ce que** l'application de la fonction de lissage configurable (Fg) se fait en tout cas en respectant les règles suivantes :
d1) détermination du nombre des jeux de données actifs (3a1, 3a2, 3a3, 3a4, 3b1, 3b2, 3b3), une pondération individuelle en pourcentage (wab1, wab2, wab3, wfern1, wfern2, wfern3) étant attribuée à chaque jeux de données actif (3a1, 3a2, 3a3, 3a4, 3b1, 3b2, 3b3) au moyen des données de commande (1a),
d2) détermination des intensités lumineuses cibles (IsegmZ) à émettre de chaque segment (2a) par superposition des valeurs d'intensité lumineuse (IsegmLV) pouvant être déduites des jeux de données actifs (3a1, 3a2, 3a3, 3b1, 3b2, 3b3) en tenant compte de la pondération respective,
d3) sortie des intensités lumineuses cibles (IsegmZ) pour chaque segment (2a) en tenant compte d'un taux de variation temporel maximal admissible prédéfinissable de l'intensité lumineuse qui est émise par le segment (2a) respectif, en cas de dépassement d'un taux de variation temporel maximal admissible (Var) pouvant être prédéfini par la fonction de lissage configurable (Fg), les intensités lumineuses cibles (IsegmZ, IsegmZ') sont manipulées temporairement de telle sorte que le taux de variation temporel maximal admissible (Var_max) ne soit pas dépassé.

2. Procédé selon la revendication 1, dans lequel la somme des pondérations individuelles en pourcentage (wab1, wab2, wab3, wfern1, wfern2, wfern3) dans chaque groupe (3a, 3b) ne dépasse pas la valeur 100%, et dans lequel à chaque groupe (3a, 3b) est à nouveau associée une valeur de pondération de groupe (wab_ges, wfern_ges), et la somme des valeurs de pondération de groupe ne dépasse pas la valeur 100%, la détermination des intensités lumineuses cibles de chaque segment (2a) s'effectuant selon l'étape d2) en multipliant les pondérations individuelles en pourcentage (wab1, wab2, wab3, wab4, wfern1, wfern2) par la valeur de pondération de groupe respective (wab_ges, wfern_ges) du groupe associé sont multipliées et des valeurs de pondération résultantes (wab1_res, wab2_res) sont calculées, les valeurs d'intensité lumineuse (IsegmLV) pouvant être déduites des jeux de données actifs (3a1, 3a2, 3a3, 3a4, 3b1, 3b2, 3b3, 3b4) étant multipliées par la valeur de pondération résultante respective (wab1_res, wab2_res) sont multipliées et les valeurs d'intensité lumineuse de chaque jeu de données actif (3a1, 3a2, 3a3, 3a4, 3b1, 3b2, 3b3, 3b4) qui en résultent pour chaque segment (2a) sont additionnées et cette somme est définie comme intensité lumineuse cible pour chaque segment (2a).

3. Procédé selon la revendication 2, dans lequel toutes les valeurs de pondération sont choisies de sorte que la somme des valeurs de pondération résultantes (wab1_res, wab2_res) atteigne la valeur 100%.

4. Procédé selon l'une des revendications précédentes, dans lequel le premier groupe (3a) des jeux de données de feux de croisement (3a1, 3a2, 3a3, 3a4) comprend des ensembles de données pour générer les différentes distributions de feux de croisement (LVa1, LVa2, LVa3, LVa4) suivantes :
I) une première distribution des feux de croisement (LVa1), qui peut être utilisée comme répartition standard des feux de croisement, de préférence un feu de croisement sans éblouissement,
II) une deuxième distribution des feux de croisement (LVa2) qui, par rapport à la première distribution des feux de croisement, présente une portée accrue dans une moitié droite de la distribution lumineuse, afin de permettre une portée accrue sur un bord droit de la chaussée pour une meilleure détection des piétons,
III) une troisième distribution des feux de croisement (LVa3), qui est élargie par rapport à la première distribution des feux de croisement et présente une coupure horizontale,
IV) une quatrième distribution des feux de croisement (LVa4), qui présente une portée accrue par rapport à la première distribution des feux de croisement, en ce que la distribution des feux de croisement est décalée verticalement vers le haut d'un angle d'au moins 1° par rapport à la première distribution lumineuse.

5. Procédé selon l'une quelconque des revendications précédentes, dans lequel le deuxième groupe (3b) des jeux de données de feux de route (3b1, 3b2, 3b3) comprend des ensembles de données pour générer les différentes distributions de feux de route (LVb1, LVb2, LVb3, LVb4) suivantes :
I) une première distribution de feux de route (LVb1), qui peut être utilisée comme distribution de feux de route standard,
II) une deuxième distribution de route (LVb2), qui présente une intensité lumineuse réduite par rapport à la première distribution de route (LVb2), mais qui fonctionne de telle sorte que celui-ci continue à satisfaire au moins aux exigences légales minimales,
III) une troisième distribution des feux de route (LVb3) qui, par rapport à la première distribution des feux de route, augmente l'intensité lumineuse ou la portée, par exemple en relevant le cône de lumière généré par le projecteur du véhicule automobile, à une vitesse élevée du véhicule.

6. Procédé selon l'une quelconque des revendications précédentes, dans lequel le nombre d'ensembles de données comprend un troisième groupe (3c) d'ensembles de données concernant des distributions d'éclairage spéciales qui ne correspondent ni à une distribution des feux de croisement ni à une distribution des feux de route.

7. Procédé selon l'une des revendications précédentes, dans lequel le taux de variation temporel maximal (Var_max) des intensités lumineuses cibles (IsegmZ) varie en fonction des données de commande (1a) saisies à l'intérieur d'une limite supérieure et d'une limite inférieure prédéfinies, le taux de variation temporel effectif (Var) étant en tout cas choisi de telle sorte qu'une variation de l'intensité lumineuse cible de 0% à 100% s'effectue en une durée comprise entre 0,1s et 5s.

8. Procédé selon la revendication 7, dans lequel, en cas de détection d'une situation de trafic critique, le taux de variation temporel maximal (Var_max) est augmenté par rapport à un fonctionnement normal.

9. Procédé selon l'une des revendications précédentes, dans lequel le projecteur automobile adaptatif (2) est agencé pour contrôler la plausibilité des données de commande (1a) et effectue ce contrôle en continu, un retour à un fonctionnement sur étant effectué en cas de constatation de données de commande (1a) corrompues, dans lequel la première distribution des feux de croisement (LVa1) est de préférence émise.

10. Procédé selon l'une des revendications précédentes, dans lequel les données de commande (1a) contiennent des informations relatives à d'autres usagers de la route détectés dans l'environnement du véhicule (1), et dans le cas où les jeux de données actifs (3a1, 3a2, 3a3, 3a4, 3b1, 3b2, 3b3, 3b4) contiennent des jeux de données de feux de croisement (3a1, 3a2, 3a3, 3a4), ces distributions de feux de route sont manipulées de telle sorte que les segments (2a) dont l'activation entraînerait un éblouissement de ces usagers de la route sont commandés avec une intensité plus faible, de préférence sont complètement occultés.

11. Procédé selon l'une quelconque des revendications précédentes, dans lequel, pour délivrer des effets, les intensités lumineuses cibles (IsegmZ) pour chaque segment (2a) selon l'étape d3) peuvent être manipulées temporairement en remplaçant les intensités lumineuses cibles (IsegmZ) calculées selon l'étape d3) par des intensités lumineuses d'effet.

12. Procédé selon l'une quelconque des revendications précédentes, dans lequel les intensités lumineuses cibles selon l'étape d3) sont manipulées en fonction de l'angle de braquage du véhicule (1), en déplaçant (move_hor) horizontalement la distribution lumineuse cible calculée par l'étape d3) en fonction de l'angle de braquage du véhicule (1).

13. Projecteur automobile adaptatif (2), agencé pour être utilisé dans un procédé selon l'une des revendications précédentes, le projecteur adaptatif (2) pour véhicule automobile étant agencé pour émettre différentes distributions lumineuses segmentées avec une résolution d'au moins 2x12 et présentant à cet effet des sources lumineuses (2aa) disposées en segments (2a), chaque segment (2aa) comprenant au moins une source lumineuse LED.

14. Véhicule automobile (1) comprenant un projecteur automobile adaptatif (2) selon la revendication 13 ainsi qu'une première mémoire de données (3) qui est associée au projecteur automobile adaptatif (2), un certain nombre de jeux de données (3a1, 3a2, 3a3, 3a4, 3b1, 3b2, 3b3, 3b4) étant stockés dans la première mémoire de données (3), chaque jeu de données définissant pour chaque segment (2a) une valeur d'intensité lumineuse (IsegmLV) pour la conversion d'une distribution lumineuse (LVa1, LVa2, LVa3, LVa4, LVb1, LVb2, LVb3) à émettre par le projecteur automobile adaptatif (2), le nombre de jeux de données comprenant au moins deux groupes (3a, 3b) de jeux de données, à savoir un premier groupe (3a) de jeux de données de feux de croisement (3a1, 3a2, 3a3, 3a4) et un deuxième groupe (3b) des jeux de données de feux de route (3b1, 3b2, 3b3, 3b4), chaque groupe (3a, 3b) comprenant au moins un jeux de données (3a1, 3a2, 3a3, 3a4, 3b1, 3b2, 3b3, 3b4), chaque jeux de données de feux de croisement (3a1, 3a2, 3a3, 3a4) étant destiné à générer une distribution de feux de croisement et chaque jeux de données de feux de route (3b1, 3b2, 3b3) est configuré pour générer une distribution des feux de route, les configurations des distributions respectives des feux étant différentes pour différents jeux de données (3a1, 3a2, 3a3, 3a4, 3b1, 3b2, 3b3, 3b4), le véhicule automobile (1) étant conçu pour détecter l'environnement ainsi que pour transmettre des données de commande (1a) au projecteur du véhicule automobile.
